Europäisches Patentamt

European Patent Office

Office européen des brevets

(11) Veröffentlichungsnummer: **0 397 957**

**A1**

# (12) EUROPÄISCHE PATENTANMELDUNG

(21) Anmeldenummer: **89890153.3**

(22) Anmeldetag: **19.05.89**

(51) Int. Cl.5: **H02J 7/00, F21L 9/00**

(43) Veröffentlichungstag der Anmeldung:
**22.11.90 Patentblatt 90/47**

(84) Benannte Vertragsstaaten:
**AT BE CH DE FR GB IT LI LU NL SE**

(71) Anmelder: **Mata, Friedrich**
**Voralpenstrasse 12**
**A-3130 Herzogenburg(AT)**

(72) Erfinder: **Mata, Friedrich**
**Voralpenstrasse 12**
**A-3130 Herzogenburg(AT)**

(74) Vertreter: **Gibler, Ferdinand, Dipl.Ing. Dr.**
**techn.**
**Dorotheergasse 7/14**
**A-1010 Wien(AT)**

(54) **Handleuchte mit eingebautem Akkumulator und eingebauter Ladevorrichtung.**

(57) Handleuchte mit eingebautem Akkumulator und eingebauter Ladevorrichtung, die über Kontakte mit einer Spannungsquelle insbesondere einer Kraftfahrzeugbatterie, verbindbar ist. Um bei solchen Handleuchten einerseits eine überlastung der u.U. schwachen Spannungsquelle zu vermeiden und anderseits eine zu geringe Ladung des Akkumulators zu vermeiden, ist vorgesehen, daß ein mit der Spannungsquelle (Batt) gegebenenfalls über eine Gleichrichterbrückenschaltung (1) in Verbindung stehender Referenzspannungspfad (D1, 2) vorgesehen ist, dem ein mit der Spannungsquelle, bzw. der Gleichrichterbrückenschaltung (1) verbundener Spannungsteiler (3, 4) parallel geschaltet ist, dessen Mittelanschluß mit einem Komparator (5), dessen zweiter Eingang mit dem Referenzspannungspfad (D1, 2), bzw. mit der in diesem angeordneten Referenzspannungsquelle (D1) verbunden ist und dessen Ausgang mit einem Steuereingang eines mit der Spannungsquelle, bzw. der Gleichrichterbrückenschaltung (1) verbundenen Ladungsreglers (6) verbunden ist, der ausgangsseitig mit dem Akkumulator (7) der Handleuchte verbunden ist.

Die Erfindung bezieht sich auf eine Handleuchte mit eingebautem Akkumulator und eingebauter Ladevorrichtung, die über Kontakte mit einer Spannungsquelle, insbesondere einer Kraftfahrzeugbatterie, verbindbar ist.

Eine solche Handleuchte wurde z.B. durch die DE-OS 21 17 257 bekannt. Bei dieser ist eine Ladung sowohl von einer Autobatterie als auch von einem Netzanschluß her möglich, wobei eine gegenseitige Verriegelung der beiden Lademöglichkeiten vorgesehen ist. Bei einer Ladung von der Autobatterie aus erfolgt im bekannten Falle ein direkter Anschluß an die Autobatterie, wobei lediglich als Schutz gegen eine falsche Polung eine Diode und als Ladestrombegrenzung ein Widerstand in der Verbindungsleitung vorgesehen sind.

Bei dieser bekannten Lösung ergibt sich allerdings der Nachteil, daß bei bereits schwacher Autobatterie diese durch den Akkumulator der Handleuchte weiter belastet wird und anderseits der Akkumulator aber kaum geladen wird, da bei geringen Spannungsunterschieden zwischen der Speisespannung und der Akkumulatorspannung der innere Widerstand des Akkumulators stark ins Gewicht fällt. Weiters wird bei Vorhandensein einer Ladungskontrolle der Eindruck einer Ladung de Akkumulators erweckt, die jedoch praktisch nicht stattfindet.

Ziel der Erfindung ist es diese Nachteile zu vermeiden und eine Handleuchte der eingangs erwähnten Art vorzuschlagen, bei der eine Ladung des Akkumulators nur bei Vorliegen entsprechender Verhältnisse erfolgt, wodurch auch eine längere Lebensdauer des Akkumulators erreichbar ist.

Erfindungsgemäß wird dies dadurch erreicht, daß ein mit der Spannungsquelle gegebenenfalls über eine Gleichrichterbrückenschaltung in Verbindung stehender Referenzspannungspfad vorgesehen ist, dem ein mit der Spannungsquelle, bzw. der Gleichrichterbrückenschaltung verbundener Spannungsteiler parallel geschaltet ist, dessen Mittelanschluß mit einem Komparator, dessen zweiter Eingang mit dem Referenzspannungspfad, bzw. mit der in diesem angeordneten Referenzspannungsquelle verbunden ist und dessen Ausgang mit einem Steuereingang eines mit der Spannungsquelle, bzw. der Gleichrichterbrückenschaltung verbundenen Ladungsreglers verbunden ist, der ausgangsseitig mit dem Akkumulator der Handleuchte verbunden ist.

Durch diese Maßnahmen ist es auf einfache Weise möglich die Ladung des Akkumulators der Handleuchte zu unterbrechen, wenn die Versorgungsspannung unter einem für eine sachgemäße Ladung erforderlichen Wert abgesunken ist.

So kommt es zu einer Unterbrechung der Ladung wenn die Versorgungsspannung unter einen durch die Referenzspannung festgelegten Wert absinkt, da in diesem Falle der Komparator sein Ausgangssignal ändert und daher der Ladungsregler nicht mehr angesteuert ist.

Nach einem weiteren Merkmal der Erfindung kann vorgesehen sein, daß der Ladungsregler weiters eine parallel zum Akkumulator geschaltete Anzeigeleuchte steuert.

Durch diese Maßnahme ergibt sich eine eindeutige Anzeige, ob eine Ladung des Akkumulators stattfindet oder nicht.

Eine in schaltungstechnischer Hinsicht sehr einfache Lösung ergibt sich, wenn der Referenzspannungspfad durch eine eine Zenerdiode und einen Widerstand aufweisende Serienschaltung gebildet ist.

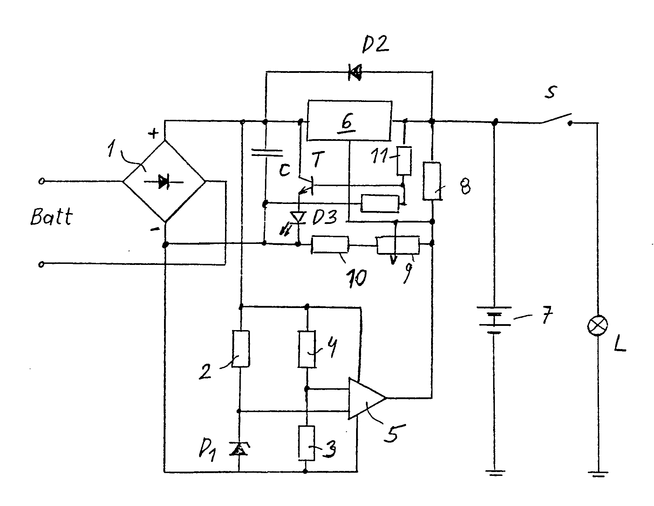

Die Erfindung wird nun anhand der Zeichnung näher erläutert, die ein Ausführungsbeispiel einer erfindungsgemäßen Handleuchte zeigt.

Beim dargestellten Ausführungsbeispiel, ist eine Brückengleichrichterschaltung 1 ein die Spannungsquelle, z.B. eine Autobatterie Batt angeschlossen, wobei ein Kondensator C parallel zum Ausgang der Brückengleichrichterschaltung 1 geschaltet ist.

An den Ausgang der Brückengleichrichterschaltung 1 ist weiters ein Referenzspannungspfad angeschlossen, der durch eine als Referenzspannungsquelle dienende Zenerdiode D1 und den Widerstand 2 gebildet ist, wobei zu diesem Referenzspannungspfad D1, 2 ein Spannungsteiler, der durch die Widerstände 3 und 4 gebildet ist, parallel geschaltet ist.

Der Verbindungspunkt der Zenerdiode D1 mit dem Widerstand 2 und der Verbindungspunkt der den Spannungsteiler bil denden Widerstände 3 und 4 sind mit je einem Eingang eines Komparators 5 verbunden, der durch einen Operationsverstärker gebildet ist.

Der Ausgang dieses Komparators 5 ist mit dem Steuereingang eines Ladungsreglers 6 verbunden, der, je nach dem ob ein Ni-Cd-Akku oder ein Bleiakkumulator 7 geladen werden soll, als Strombzw. als Spannungsregler ausgebildet ist. Der Ausgang des Komparators 5 liefert ein "high" Signal solange der Mittelabgriff des Spannungsteilers 3, 4 über dem Pegel der Referenzspannungsquelle D1 liegt, was nur bei einer genügend hohen Versorgungsspannung durch die Batterie Batt der Fall ist. Ist dies nicht der Fall so erscheint ein "Low" Signal am Ausgang des Komparators 5 und damit auch am Steuereingang des Ladungsreglers 6, wodurch dieser keine Spannung mehr an seinem Ausgang abgibt und daher die weitere Ladung des Akkumulators 7 unterbleibt.

Die Widerstände 8, 9 und 10 dienen zur Anpassung der Steuersignale an den Ladungsregler 6, zu dem eine in Sperrichtung geschaltete Diode D2 parallel geschaltet ist.

Durch Schließen des Schalters S kann die Lampe L vom Akkumulator 7 versorgt werden.

Der Ladungsregler 6 steuert weiters eine Ladungskontroll-Anzeige, die durch eine Leuchtdiode D3 gebildet ist. Diese wird über den Transistor T gesteuert, dessen Basis über den Basisvorwiderstand 11 vom Ausgang des Ladungsreglers 6 gesteuert wird. Weiters ist noch ein Ableitwiderstand 12 vorgesehen, der mit dem Widerstand 11 einen Spannungsteiler bildet.

## Ansprüche

1. Handleuchte mit eingebautem Akkumulator und eingebauter Ladevorrichtung, die über Kontakte mit einer Spannungsquelle, insbesondere einer Kraftfahrzeugbatterie, verbindbar ist, **dadurch gekennzeichnet**, daß ein mit der Spannungsquelle (Batt) gegebenenfalls über eine Gleichrichterbrückenschaltung (1) in Verbindung stehender Referenzspannungspfad (D1, 2) vorgesehen ist, dem ein mit der Spannungsquelle, bzw. der Gleichrichterbrückenschaltung (1) verbundener Spannungsteiler (3, 4) parallel geschaltet ist, dessen Mittelanschluß mit einem Komparator (5), dessen zweiter Eingang mit dem Referenzspannungspfad (D1, 2), bzw. mit der in diesem angeordneten Referenzspannungsquelle (D1) verbunden ist und dessen Ausgang mit einem Steuereingang eines mit der Spannungsquelle, bzw. der Gleichrichterbrückenschaltung (1) verbundenen Ladungsreglers (6) verbunden ist, der ausgangsseitig mit dem Akkumulator (7) der Handleuchte verbunden ist.

2. Handleuchte nach Anspruch 1, **dadurch gekennzeichnet**, daß der Ladungsregler (6) weiters eine parallel zum Akkumulator (7) geschaltete Anzeigeleuchte (D3) steuert.

3. Handleuchte nach Anspruch 1 oder 2, **dadurch gekennzeichnet**, daß der Referenzspannungspfad durch eine eine Zenerdiode (D1) und einen Widerstand (2) aufweisende Serienschaltung gebildet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-3624367 (WITTE & SUTOR GMBH) <br> * Spalte 1, Zeile 30 - Spalte 2, Zeile 30; Figur 1 * <br><br> --- | 1-3 | H02J7/00 <br> F21L9/00 |
| Y | FUNKSCHAU. <br> vol. 57, no. 24, November 1985, MUNCHEN DE <br> Seiten 80 - 82; JENS WITTJE: <br> "Duo-Power im Auto" <br> * das ganze Dokument * <br><br> --- | 1-3 | |
| A | FR-A-2271691 (SOCIETA ITALIANA VETRO) <br> * Ansprüche 1, 3 * <br><br> ----- | 1 | |
| | | | **RECHERCHIERTE SACHGEBIETE (Int. Cl.5 )** |
| | | | H02J <br> F21L |

Der vorliegende Recherchenbericht wurde für alle Patentansprüche erstellt

| Recherchenort | Abschlußdatum der Recherche | Prüfer |
|---|---|---|
| DEN HAAG | 08 DECEMBER 1989 | GOETZ P.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

  ............................................................
& : Mitglied der gleichen Patentfamilie, übereinstimmendes
    Dokument

EPO FORM 1503 03.82 (P0403)